# DEMANDE DE BREVET EUROPEEN

(11) **EP 3 557 457 A1**
(43) Date de publication de la demande: **23.10.2019**
(21) Numéro de dépôt: 18305481.6
(22) Date de dépôt: 19.04.2018
(51) Int. Cl.: G06F 21/16, G07D 7/202

(54) **PROCÉDÉ POUR AUTHENTIFIER UN DOCUMENT SÉCURISÉ**

(71) Demandeur: Thales Dis France SA, 92190 Meudon (FR)
(72) Inventeur: LEIBENGUTH, Joseph, 92190 MEUDON (FR)
(74) Mandataire: Lotaut, Yacine Diaw

(57) **Abrégé**

L'invention concerne un procédé pour authentifier un document sécurisé (100) comportant des données imprimées par impression analogique ou numérique, ledit procédé comprenant les opérations suivantes :
- définition (300), parmi un ensemble de données graphiques et/ou alphanumériques du document sécurisé, d'au moins une zone de données distincte (200) incluant au moins un motif distinctif;
- pendant une opération de fabrication (400) du document sécurisé, mémorisation (410) de la zone de données distincte sur un dispositif de mémorisation de sorte à former une zone de données distincte de référence;
- au cours d'une opération de vérification (500) de l'authenticité du document sécurisé, extraction (530) de la zone de données distincte à partir d'une numérisation du document sécurisé; et
- comparaison (540) de la zone de données distincte extraite avec la zone de données distincte de référence pour déterminer un niveau de concordance entre lesdites zones de données distinctes et en déduire une authentification positive (570) ou négative (580).

## Description

### DOMAINE TECHNIQUE

La présente invention concerne un procédé pour authentifier un document sécurisé comportant des données imprimées par impression analogique de type offset, flexographie, héliogravure, etc. ou numérique de type jet d'encre, laser, etc. Elle concerne également un système d'authentification du document sécurisé ainsi qu'un document sécurisé ayant besoin d'être authentifié. L'invention trouve des applications dans le domaine de la sécurisation de documents et, en particulier, de l'authentification de documents sécurisés tels que les cartes d'identité, permis de conduire et passeports.

### ETAT DE LA TECHNIQUE

De façon connue en soi, les documents de sécurité, comme par exemple les documents d'identité, comprennent généralement une impression sécurisée, appelée artwork, ainsi qu'une photographie d'identité de son détenteur, des données alphanumériques telles que, par exemple, le nom du détenteur, sa date de naissance, sa taille, son adresse, le numéro du document, la date de délivrance du document et/ou l'identité de l'autorité ayant délivré le document.

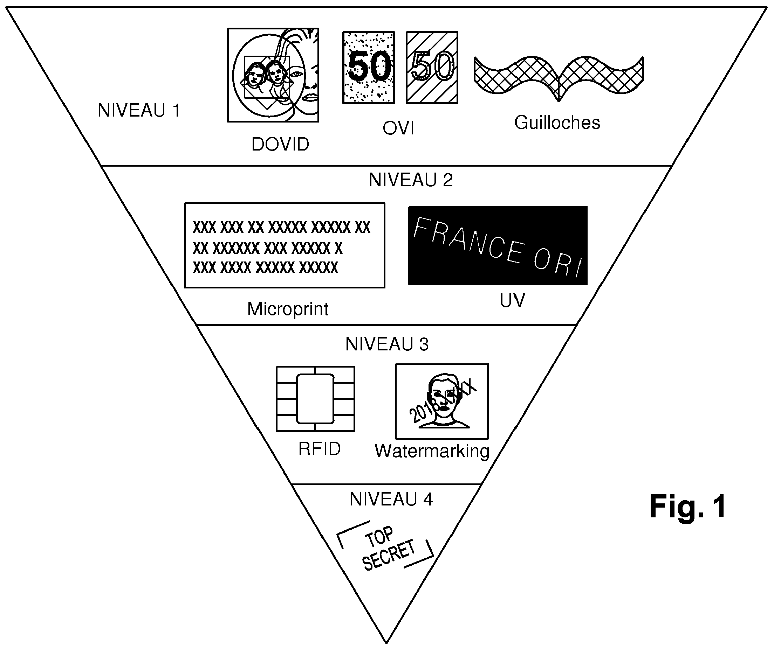

Pour sécuriser ces documents d'identité, il est connu d'ajouter différentes sortes d'éléments de sécurité assurant des niveaux de sécurité variant entre un niveau 1 et un niveau 4, comme représenté sur la figure 1. Le niveau 1 correspond à un contrôle visuel à l'oeil nu par le personnel de sécurité ; le niveau 2 correspond à un contrôle avec un appareillage optique simple tel que, par exemple, une loupe ou une lampe à rayons ultraviolets ; le niveau 3 correspond à une vérification des données au moyen d'appareils spécifiques sophistiqués ; le niveau 4 correspond à une vérification ultra sécurisée de type secret.

Il est connu, par exemple, pour un contrôle de sécurité de niveau 1, d'associer la photographie d'identité à des guilloches. Ces guilloches forment un réseau de lignes ondulées, superposées à la photographie et visibles à l'oeil nu. Les guilloches sont destinées à rendre discernable, lors d'un contrôle d'identité, toute modification frauduleuse de la photographie. Elles permettent notamment de se prémunir contre des modifications de teinte de la photographie, par exemple lors de l'ajout d'une barbe ou de cheveux.

Il est, par ailleurs, connu de mettre en oeuvre des moyens de protection des données alphanumériques mentionnées sur les documents d'identité afin de les prémunir contre des altérations de ces données comme, par exemple, des modifications des mentions alphanumériques. La protection des données alphanumériques peut être obtenue par des techniques de tatouage numérique (ou watermarking, en termes anglo-saxons) destinées à intégrer des éléments invisibles à l'oeil nu dans une photographie d'identité, ces éléments codant des informations prédéfinies. Le tatouage numérique fournit une sécurité de niveau 3 avec une vérification automatique des données encodées lors d'un contrôle de sécurité. Ainsi, au moyen d'un appareil de traitement et d'analyse numérique, la photographie d'identité est analysée et les données qui y sont tatouées sont extraites. Une vérification de la cohérence de ces données est ensuite effectuée. Toutefois, le tatouage numérique n'étant pas visible à l'oeil nu ou au moyen d'un simple appareillage optique, il ne permet pas de mettre en oeuvre une sécurité de niveau 1 ou 2. La vérification des documents sécurisés tatoués nécessite donc un personnel formé, équipé de moyens d'analyse importants, ce qui limite les contrôles de sécurité notamment les contrôles itinérants.

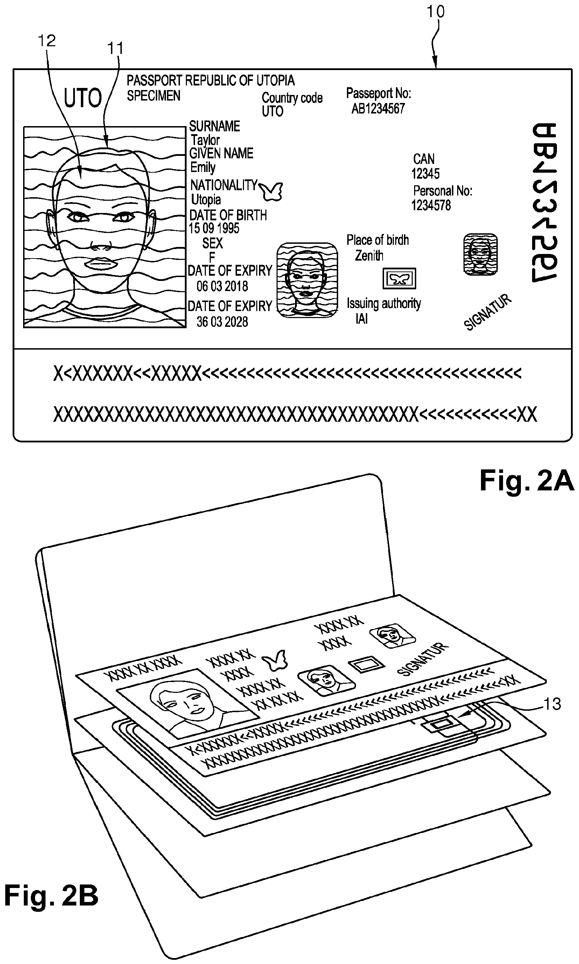

Une autre technique connue de sécurisation des documents d'identité permet de sécuriser les données alphanumériques mentionnées sur les documents d'identité. Cette technique propose d'insérer, sur la photographie d'identité, des guilloches variables encodant tout ou partie des données alphanumériques. Des exemples de procédés de sécurisation de documents utilisant de telles guilloches variables sont décrits notamment dans les demandes de brevet EP 2 325 022 A1 et US 2010/0260372 déposées au nom de la demanderesse. Un exemple de document sécurisé 10, représenté sur les figures 2A - 2B, comporte une photographie 11 munie de telles guilloches 12. Ces guilloches 12, pour pouvoir être extraites automatiquement, et ainsi répondre à un niveau 3 de sécurité, doivent être suffisamment marquées. Or, un tel marquage des guilloches altère la qualité de la photographie et la lisibilité du personnage représenté sur la photographie.

D'autres techniques de sécurisation sont également connues, comme l'inspection d'éléments de sécurité optiques comme les éléments holographiques de type DOVID (« Diffractive Optically Variable Image Device » en termes anglosaxons) ou les impressions à l'encre optiquement variable OVI (« Optically Variable Ink » en termes anglosaxons) - qui offre un niveau de sécurité 1. D'autres techniques encore offrent un niveau de sécurité 3, comme la lecture de données enregistrées dans une puce RFID du type de celle représentée par la référence 13 sur la figure 2B, insérée dans le document d'identité. Ces techniques connues permettent généralement une sécurité de niveau 3 ou une sécurité de niveau 1. Or, si une sécurité de niveau 3 est très fiable, elle nécessite généralement un personnel formé et des moyens d'analyses importants et difficilement déplaçables, ce qui entraine un coût élevé. Au contraire, une sécurité de niveau 1 est moins onéreuse mais présente une fiabilité limitée.

Le niveau de sécurité 2 présente un bon compromis entre fiabilité et coût. Il permet en outre un contrôle itinérant. Toutefois, le niveau de sécurité 2, notamment en contrôle itinérant, oblige le personnel de sécurité à être en possession de l'outil de vérification adéquat au cours de tous ses déplacements. Or, ce personnel est déjà lourdement équipé par divers dispositifs de défense et de protection.

### RESUME DE L'INVENTION

Pour répondre au problème évoqué ci-dessus de l'équipement du personnel de sécurité amené à effectuer des contrôles de sécurité itinérants de niveau 2, le demandeur propose un procédé pour authentifier un document sécurisé, avec un niveau de sécurité 2 voire un niveau 3, en utilisant un outil pouvant se présenter sous la forme d'une application de smartphone, comme par exemple la caméra intégrée au smartphone. En effet, avec la démocratisation des smartphones et le développement d'applications de plus en plus performantes, le personnel de sécurité peut utiliser son smartphone non seulement pour communiquer avec ses collègues mais également pour réaliser des contrôles de sécurité de niveau 2 voire même de niveau 3.

Selon un premier aspect, l'invention concerne un procédé pour authentifier un document sécurisé comportant des données imprimées par impression analogique ou numérique, ledit procédé comprenant les opérations suivantes :
- définition, parmi un ensemble de données graphiques et/ou alphanumériques du document sécurisé, d'au moins une zone de données distincte incluant au moins un motif distinctif;
- pendant une opération de fabrication du document sécurisé, mémorisation de la zone de données distincte sur un dispositif de mémorisation de sorte à former une zone de données distincte de référence;
- au cours d'une opération de vérification de l'authenticité du document sécurisé, extraction de la zone de données distincte à partir d'une numérisation du document sécurisé; et
- comparaison de la zone de données distincte extraite avec la zone de données distincte de référence pour déterminer un niveau de concordance entre lesdites zones de données distinctes et en déduire une authentification positive ou négative.

Ce procédé d'authentification permet un contrôle de niveau 2 ou de niveau 3 d'un document sécurisé sans nécessiter d'outil autre qu'un smartphone. Il permet en outre d'authentifier un document sans nécessiter l'ajout d'aucune donnée sécurisée supplémentaire sur ledit document.

Dans la présente description, l'expression « document sécurisé » ou « document d'identité » signifie un document comportant des données sécurisées, spécifiques ou non au détenteur du document. Un document sécurisé peut être, par exemple, une carte d'identité, un passeport, un permis de conduire ou tout autre document personnalisé en fonction de l'identité de son détenteur et émis spécifiquement pour le détenteur.

De façon avantageuse, l'opération de définition d'au moins une zone de données distincte comporte une sélection de lignes ou formes complexes prélevées dans un fichier d'impression et offrant des caractéristiques particulières ou un traitement par séparation des couleurs et génération en demi-tons de ladite zone de données distincte. Ce traitement n'a pas d'influence sur les règles de réalisation de l'impression sécuritaire pour obtenir une fusion des couches durant l'étape de lamination pour un document en polycarbonate, empêchant ainsi toute séparation ou délamination des dites couches par un faussaire.

De façon avantageuse, l'opération de fabrication comporte une opération d'impression, sur un substrat, de l'ensemble des données graphiques et alphanumériques incluant la zone de données distincte de référence.

Si nécessaire, comme par exemple dans le cas d'un document d'identité en polycarbonate, l'opération de fabrication peut comporter en outre une opération de lamination du substrat imprimé avec une pluralité de couches de matériaux pour constituer le document sécurisé.

Selon certains modes de réalisation, l'impression est une impression offset.

Selon certains modes de réalisation, la mémorisation de la zone de données distincte de référence est réalisée après l'impression de l'ensemble des données graphiques et alphanumériques et une première numérisation du document sécurisé.

Selon une variante, l'opération de fabrication comporte une étape de calibration de la zone de données distincte de référence et de génération d'un fichier d'impression corrigé intégrant la zone de données distincte de référence et les bruits d'impression et/ou de lamination, un flux de matière et/ou des variations de couleurs résultants de l'impression analogique ou numérique. Cette variante permet de mémoriser une zone de données distincte de référence correspondant à la zone de données distincte telle qu'elle a été réellement imprimée.

Selon certains modes de réalisation, la mémorisation de la zone de données distincte de référence est réalisée avant l'impression de l'ensemble des données graphiques et alphanumériques.

Selon un ou plusieurs modes de réalisation, la numérisation du document sécurisé lors de l'opération de vérification du document sécurisé consiste en un scan ou une photographie dudit document sécurisé.

Selon certains modes de réalisation, la zone de données distincte de référence est enregistrée dans une puce sécurisée.

Selon certains modes de réalisation, la zone de données distincte de référence est enregistrée dans un serveur distant.

Selon un ou plusieurs modes de réalisation, l'extraction de la zone de données distincte pendant l'opération de vérification du document sécurisé comporte une opération de prélèvement, sur ledit document numérisé, de la zone de données distincte correspondant à la zone de données distincte de référence.

Selon une variante, l'opération de prélèvement comporte un traitement d'image assurant le calage de la zone de données distincte prélevée sur la zone de données distincte de référence.

De façon avantageuse, la zone de données distincte telle que numérisée est convertie dans un format pixels.

Selon un ou plusieurs modes de réalisation, l'opération de comparaison de la zone de données distincte de référence avec la zone de données distincte extraite comporte une estimation d'un score basé sur une distance entre chaque point du motif de la zone de données distincte extraite et un point correspondant du motif de la zone de données distincte de référence.

Selon un deuxième aspect, l'invention concerne un système d'authentification d'un document sécurisé comprenant au moins :
- un dispositif d'impression analogique ou numérique pour imprimer le dispositif sécurisé,
- un dispositif pour numériser le document sécurisé ; et
- un dispositif de traitement de données comportant un ensemble d'instructions qui amènent ledit dispositif à mettre en oeuvre le procédé d'authentification défini ci-dessus.

Le dispositif d'impression analogique peut être un dispositif d'impression offset, de flexographie ou tout autre dispositif d'impression de type analogique. Le dispositif d'impression numérique peut être un dispositif d'impression à jet d'encre, d'impression laser ou tout autre dispositif d'impression numérique.

De façon avantageuse, le dispositif pour numériser le document sécurisé est un appareil photo intégré à un smartphone.

Selon un troisième aspect, l'invention concerne un document sécurisé comportant au moins une surface munie d'un ensemble de données graphiques et/ou alphanumériques imprimées par un procédé d'impression, caractérisé en ce que l'ensemble de données imprimées comporte une zone de données distincte mémorisée et apte à être authentifiée par le procédé d'authentification défini ci-dessus.

De façon avantageuse, le document sécurisé comporte une puce sécurisée dans laquelle la zone de données distincte de référence est mémorisée.

### BREVE DESCRIPTION DES FIGURES

D'autres avantages et caractéristiques de l'invention apparaîtront à la lecture de la description, illustrée par les figures dans lesquelles :
- La figure 1, déjà décrite, représente les différents niveaux de sécurité des contrôles de documents sécurisés ;
- Les figures 2A-2B, déjà décrites, représentent un exemple, respectivement, d'une page et d'un ensemble de pages d'un document sécurisé par des éléments de sécurisation connus ;
- Les figures 3A-3B représentent un exemple de document sécurisé, recto-verso, avec une zone de données distincte ;
- La figure 4 représente, sous la forme d'un diagramme fonctionnel, un exemple du procédé d'authentification de l'invention ;
- La figure 5 représente, sous la forme d'un diagramme fonctionnel, un mode de réalisation de la procédure d'extraction dans le procédé de l'invention ;
- La figure 6 représente un exemple de grossissement d'une portion d'image en demi-tons particulièrement adaptée pour la mise en oeuvre du procédé de l'invention.

### DESCRIPTION DETAILLEE D'AU MOINS UN MODE DE REALISATION

Un exemple de réalisation d'un procédé pour authentifier un document sécurisé - par exemple une carte d'identité - avec un niveau de sécurité 2 est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

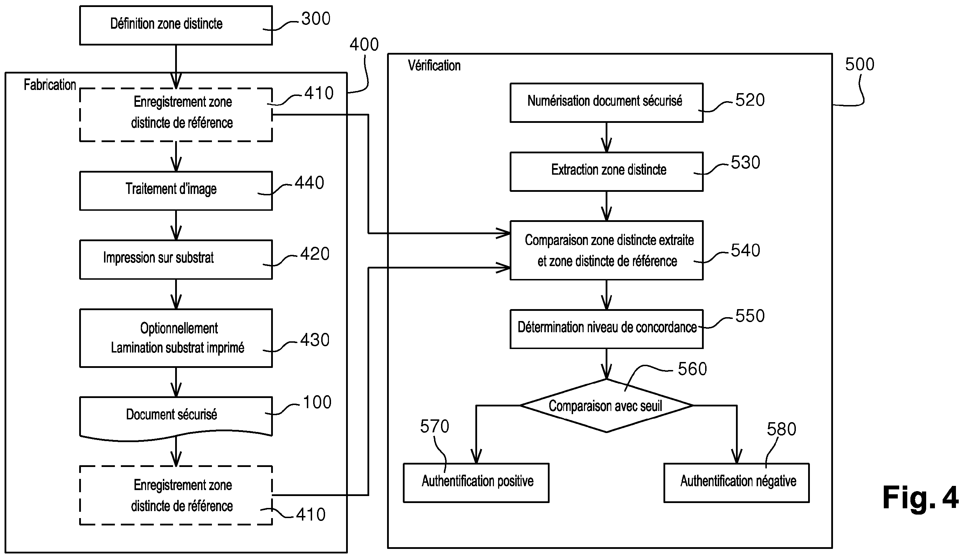

Un exemple des différentes étapes du procédé d'authentification selon l'Invention est représenté sur la figure 4. Ce procédé comporte une première opération 300 de définition d'au moins une partie distinctive 200 des données du document sécurisé. Cette opération 300 propose de sélectionner, dans l'ensemble des données initiales prévues pour être imprimées sur le document sécurisé, une ou plusieurs partie(s) distinctive(s) destinée(s) à constituer une référence pour une comparaison future. Cette partie distinctive 200, appelée aussi zone de données distincte ou zone distincte, comporte des données alphanumériques, des données graphiques, des guilloches, la photographie du détenteur ou tous autres caractères ou dessins destinés à être imprimés sur le document sécurisé. Cette partie distinctive 200 est une zone de données sélectionnées parmi l'ensemble des données graphiques et alphanumériques du document sécurisé. Les données sélectionnées, appelées aussi motifs ou motifs distinctifs, peuvent être des données spécifiques au détenteur ou bien n'importe quelles données imprimées sur le document sécurisé. Par exemple, une zone de données peut être sélectionnée lorsqu'elle comporte des lignes fines, des ensembles de points spécifiques, une position ou une couleur spécifique, etc. Toute carte d'identité ou document sécurisé comporte une zone de données suffisamment particulière pour constituer une partie distinctive. Lorsque les données sélectionnées sont spécifiques au détenteur, leur traitement permet de déterminer une éventuelle falsification du document. Lorsque les données sélectionnées ne sont pas spécifiques au détenteur, leur traitement permet de déterminer si le document est un faux document fabriqué par un faussaire.

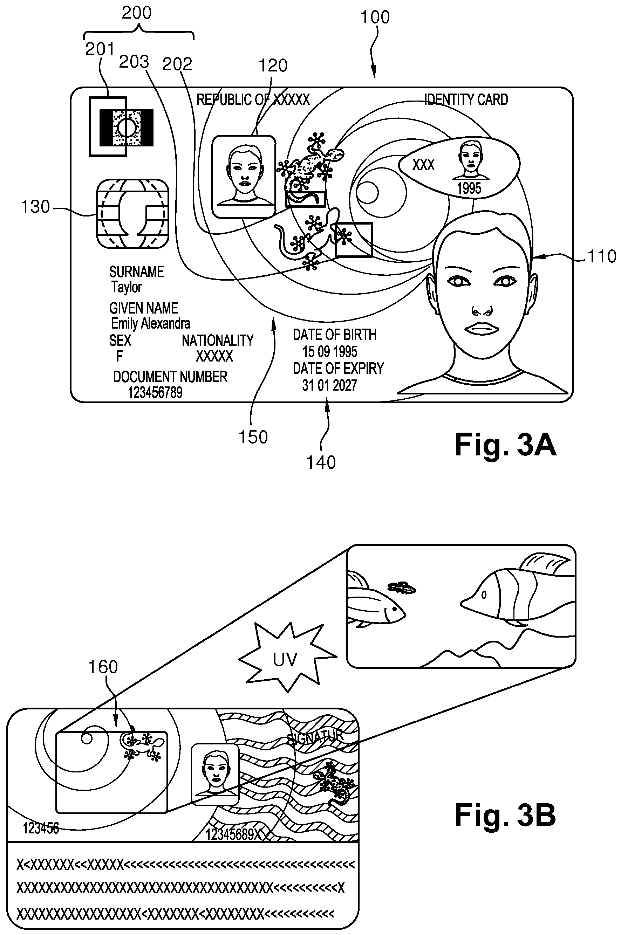

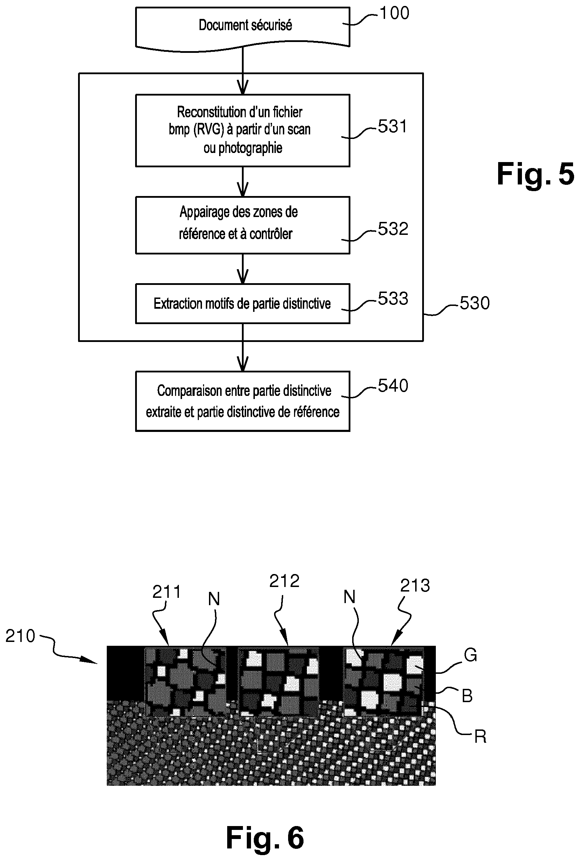

Un exemple d'une carte d'identité 100 réalisée selon le procédé de l'invention est représenté sur les figures 3A et 3B. Cette carte d'identité 100 comporte, comme la plupart des cartes d'identités actuelles, une pluralité d'éléments de sécurité. Elle comporte, par exemple, sur son recto (figure 3A), des données alphanumériques 140 relatives au détenteur de la carte, une photographie 110 du détenteur ainsi qu'une représentation 120, par exemple sous la forme d'un patch gravé ou imprimé, de cette même photographie 110. La carte d'identité 100 peut comporter également des guilloches 150, une puce sécurisée 130 et/ou tout autre élément de sécurisation. Dans l'exemple de la figure 3B, la carte d'identité 100 comporte, sur son verso, une image en couleurs sécurisée 160 de haute résolution, visible sous une exposition UV par exemple de 365nm. Cette image sécurisée 160 est réalisée en impression demi-tons comme le montre l'agrandissement de la figure 6. Elle offre des zones distinctives pour la mise en oeuvre du procédé.

Dans l'exemple des figures 3A-3B, la partie distinctive sélectionnée pour la mise en oeuvre du procédé de l'invention pourrait être les zones référencées 201, 202 et/ou 203, par exemple. Ces zones 201 - 203 comportent chacune un grand nombre de données graphiques colorées ou non, comme des guilloches ou portions de guilloches, des lignes ou portions de lignes, des dessins ou portions de dessins, ou toutes autres données graphiques distinctives. Par exemple, la zone 201 comporte une portion de la représentation du drapeau du pays dont le détenteur est ressortissant et une portion de lignes courbes colorées ; la zone 202 comporte une portion d'un gecko coloré (par exemple sa queue) et une portion de lignes en forme de spirale colorée ; la zone 203 comporte une portion d'un autre gecko coloré (par exemple sa patte) et une autre portion de la spirale colorée. Quelle que soit la partie distinctive 200 choisie, cette dernière doit être une zone très particulière de la carte d'identité avec, de préférence, plusieurs couleurs et plusieurs sortes de graphiques, comme par exemple une zone riche en encre (exemple : le gecko ou le drapeau) et une zone en lignes fines (exemple : la spirale ou des guilloches).

Lorsque le document sécurité ne dispose pas de zones caractéristiques suffisamment contrastées, une variante de l'invention propose d'ajouter quelques distorsions minimales sur une zone choisie de sorte à générer une signature spécifique. La zone caractéristique et des éléments caractéristiques de cette zone (nombre de points d'intersection des guilloches, nombre de points de couleurs RGB ou CMY, etc.) sont enregistrés pour former la partie distinctive.

Le procédé d'authentification de l'invention comporte, après l'opération 300 de sélection, un ensemble 400 d'opérations permettant la fabrication du dispositif sécurisé et un ensemble 500 d'opérations permettant la vérification dudit document sécurisé.

Les opérations de fabrication 400, mises en oeuvre par le fabriquant de documents sécurisés, comportent une opération 410 d'enregistrement de la partie distinctive 200. En effet, une fois la partie distinctive sélectionnée, celle-ci est mémorisée dans un dispositif de mémorisation adapté. Le dispositif de mémorisation peut être la puce sécurisée 130 du document sécurisé. La partie distinctive servant de référence est ainsi enregistrée dans le document sécurisé lui-même de sorte qu'elle peut être lue avec n'importe quel lecteur de carte à puce. Le dispositif de mémorisation peut également être un serveur central auquel le personnel de sécurité peut se connecter à distance via tout type de connexion à distance.

La mémorisation 410 de la partie distinctive 200 peut être réalisée au début des opérations 400 de fabrication du document sécurisé, c'est-à-dire directement après l'opération 300 de sélection de ladite partie distinctive. Dans un autre mode de réalisation décrit par la suite, la partie distinctive peut être enregistrée ultérieurement, à la fin des opérations 400 de fabrication du document sécurisé. Les deux modes de réalisation apparaissent simultanément en pointillés, sur la figure 4, étant entendu qu'une seule opération de mémorisation n'est mise en oeuvre lors de la fabrication du document sécurisé.

Le document sécurisé est ensuite imprimé selon une technique connue d'impression numérique ou d'impression analogique comme l'impression offset. Cette opération 420 d'impression comporte la fabrication d'une plaque d'impression par flashage (« computer to plate » en termes anglo-saxons) puis l'impression, sur un substrat prédéfini, comme par exemple un support en polycarbonate, de l'ensemble des données graphiques et alphanumériques du document sécurisé. Dans certains modes de réalisation, par exemple lorsque le document d'identité est en polycarbonate, l'opération de fabrication peut comporter une opération 430 de lamination qui consiste, après impression du substrat, à laminer ledit substrat imprimé avec une ou plusieurs couches de matériaux différents. Une opération de personnalisation - avec ajout d'une photographie et des données personnelles du détenteur - permet ensuite d'obtenir le document sécurisé 100. Le document sécurisé 100 contient ainsi toutes les données graphiques et alphanumériques relatives au détenteur et à l'état émetteur du document sécurisé ; il contient, parmi ces données, la partie distinctive 200 sélectionnée. L'homme du métier notera que cette partie distinctive 200 n'est pas discernable sur le document physique et que seul son enregistrement permet de connaitre son contenu. L'enregistrement de la partie distinctive tenue secrète n'induit pas de modifications au document de sécurité et à son procédé de fabrication classique.

Les opérations de vérification 500, requises par le personnel de sécurité, comportent tout d'abord une opération 520 de numérisation du document sécurisé sous sa forme physique. Cette numérisation peut être effectuée par le personnel de sécurité, par exemple, en scannant le document sécurisé ou bien en prenant une photographie dudit document sécurisé. Cette opération de numérisation peut être mise en oeuvre, dans certains modes de réalisation, au moyen de l'appareil photographique d'un smartphone.

Le procédé comporte ensuite une opération 530 d'extraction de la partie distinctive. La partie distinctive extraite est ensuite comparée, pixel par pixel, à la partie distinctive de référence enregistrée sur le serveur distant ou sur la puce sécurisée (étape 540 de la figure 4). À l'issue de cette comparaison, un niveau de concordance est déterminé à l'étape 550. Une comparaison (étape 560) de ce niveau de concordance calculé avec un niveau de concordance seuil, prédéfini et considéré comme un niveau acceptable, permet de déterminer si l'authentification est positive (étape 570) ou négative (étape 580). Une authentification positive signifie que le document sécurisé est considéré comme authentifié. Au contraire, une authentification négative signifie que le document sécurisé est considéré comme non-authentifié, par exemple contrefait ou falsifié. Ces opérations d'extraction, de comparaison et de détermination du niveau de concordance peuvent être mises en oeuvre par un smartphone, via une application chargée dans ledit smartphone ou un ordinateur distant connecté audit smartphone.

Comme exposé ci-dessus, selon un mode de réalisation, la partie distinctive 200 sélectionnée comme référence est une zone de données numériques choisies dans l'ensemble des données graphiques et alphanumériques destinées à être imprimées. La partie distinctive est alors mémorisée avant l'impression offset. Ce mode de réalisation permet une sélection très précise des données destinées à former la partie distinctive 200.

Selon un autre mode de réalisation, la partie distinctive 200 sélectionnée comme référence est une zone de données analogiques choisie dans le document sécurisé après impression. Dans ce mode de réalisation, le document sécurisé est scanné tout de suite après impression et la partie distinctive 200 est sélectionnée dans le scan du document. La partie distinctive 200 qui comporte alors des données numériques issues du document analogique est mémorisée à la fin des opérations 400 de fabrication, après que le document sécurisé 100 ait été produit. Ce mode de réalisation a l'avantage de prendre en compte le bruit introduit par l'impression et la lamination. En effet, toute impression, de type analogique ou numérique, et l'impression offset en particulier, peut générer quelques légères différences, appelées bruit, entre les données numériques initiales prévues pour être imprimées et les données analogiques obtenues après impression. De même, l'opération de lamination peut également générer du bruit. Le fait de scanner le document sécurisé tout de suite après l'impression permet de prendre en compte ce bruit de sorte à permettre un niveau de concordance plus précis lors de la comparaison de la partie distinctive extraite lors de la vérification et de la partie distinctive de référence. Dans une variante, la partie distinctive 200 peut être définie avant impression du document sécurisé, mais enregistrée après avoir été scannée. C'est alors le scan de la partie distinctive sélectionnée qui est mémorisée comme partie distinctive de référence.

Dans certains modes de réalisation, les opérations de fabrication 400 comportent, préalablement à l'opération d'impression 420, une opération de traitement d'image 440 qui consiste à transformer les données de la partie distinctive sélectionnée afin de former une image visible sous rayonnements ultra-violets (UV). Un exemple d'un tel traitement d'image est décrit, notamment, dans les demandes US 8 085 438 B2 et EP 2 158 090 B1. Ce procédé consiste, au moins sur la partie distinctive de référence 200, à réaliser une séparation des couleurs et à appliquer la technique des demi-tons, ou halftoning, en utilisant un algorithme basé sur le mappage de la gamme de couleurs (ou gamut) et sur la juxtaposition des demi-tons. Un exemple d'une portion d'image obtenue avec ce procédé est représenté sur la figure 6. Cette portion d'image 210 comporte une pluralité de points couleurs rouges R, bleus B, verts G, juxtaposés les uns à côté des autres. Ces points couleurs sont des points de dimensions variables réalisés avec de l'encre rouge, bleue et/ou verte. Comme le montre les portions agrandies 211-213 de l'image 210, tous les points couleurs sont distants les uns des autres, séparés par des zones neutres, c'est-à-dire sans encre. Ces pixels distants sont arrangés de telle sorte que l'oeil humain ne discerne pas des points séparés mais qu'il intègre ces points couleurs de sorte à percevoir des motifs continus et des nuances de couleurs.

Ainsi, lors de l'opération 430 de lamination, sous l'effet de la température et de la pression, les différentes couches de matériaux fusionnent les unes avec les autres et notamment avec les zones neutres. En effet, contrairement aux points couleurs R, G, B qui contiennent de l'encre qui a pour effet de limiter l'adhérence des couches entre elles, les zones neutres permettent une forte adhérence desdites couches entre elles. La mise en oeuvre d'un tel traitement d'image, lorsque le support d'impression est en polycarbonate, nécessite que la charge d'encre soit inférieure ou égale à 40% pour permettre une fusion des couches correcte. Avec un tel traitement, les différentes couches à l'endroit des zones neutres ne peuvent être délaminées ou séparées par un faussaire. Un faussaire souhaitant modifier les données imprimées dans les couches intérieures du document sécurisé ne pourra pas délaminer ces couches intérieures, par exemple le substrat imprimé, sans détruire l'ensemble du document sécurisé.

En outre, lorsque ce procédé de création d'image est mis en oeuvre sur la totalité de l'ensemble des données graphiques et alphanumériques, le document sécurisé est obtenu avec un rendu couleurs brillant et contrasté.

Quel que soit le mode d'enregistrement de la zone distincte de référence (avant impression ou après impression), la partie distinctive extraite à l'étape 530 est comparée à la partie distinctive de référence enregistrée. La partie distinctive extraite est obtenue en prélevant, sur le scan ou la photographie du document sécurisé, la zone correspondant à la zone distincte de référence. On obtient ainsi une forme numérique de la partie distinctive 200 telle qu'imprimée sur le document sécurisé 100. L'opération de prélèvement de la zone distincte sur le document numérisé peut être complétée par un traitement de l'image numérisée afin de caler, si nécessaire, la zone distincte à prélever par rapport à la zone distincte de référence. Ce calage peut être réalisé, angulairement et dimensionnellement, dans un repère orthonormé. La zone distincte ainsi prélevée, et éventuellement traitée, constitue la zone distincte extraite ou partie distinctive extraite.

La partie distinctive extraite et la partie distinctive de référence étant toutes deux sous une forme numérique, elles peuvent être comparées point par point l'une à l'autre, c'est-à-dire pixel par pixel.

Selon certains modes de réalisation, la partie distinctive de référence est mémorisée sous un format numérique tel que le format pdf ou jpeg. Cette partie distinctive de référence est alors convertie en pixels, par exemple sous un format bmp, par un des outils connus de conversion. De même, la partie distinctive extraite est convertie en pixels, sous le même format que la partie distinctive de référence. Pour convertir la partie distinctive extraite, un mode de réalisation propose de convertir la totalité du document sécurisé numérisé puis de prélever uniquement la zone choisie, à savoir la zone correspondant à la partie distinctive. Un autre mode propose de prélever d'abord la partie distinctive et de convertir uniquement cette partie distinctive prélevée.

Une opération de mise à l'échelle peut être nécessaire pour que la partie distinctive extraite et la partie distinctive de référence soient à la même échelle. Lorsque les deux parties distinctives extraite et de référence sont à la même échelle, elles peuvent être comparées pixel à pixel en superposant les deux parties distinctives.

Comme représenté sur la figure 4, l'opération 540 de comparaison de la partie distinctive extraite avec la partie distinctive de référence, peut être réalisée au moyen d'un algorithme qui compare pixel par pixel, les deux parties distinctives de sorte à répertorier les différences entre deux points à deux emplacements similaires sur la partie distinctive de référence et la partie distinctive extraite.

Cette comparaison pixel à pixel peut être réalisée par un procédé d'appariement (appelé « matching » en termes anglo-saxons) dans lequel un échantillon de quelques pixels est prélevé dans la partie distinctive de référence et déplacé sur la partie distinctive extraite jusqu'à ce que l'échantillon soir calé, c'est-à-dire qu'il coïncide avec la partie distinctive extraite. On parle de calage ou de coïncidence pour le positionnement de l'échantillon offrant la plus grande cohérence. Lorsque cette position de calage est déterminée, un repère orthonormé XY est positionné et mémorisé en fonction de cette position.

Dans les modes de réalisation où la partie distinctive est obtenue par le procédé de séparation des couleurs et de halftoning, le repère XY peut être inséré dans la zone neutre séparant les différents points d'encre.

Dans certains modes de réalisation, des mires peuvent être installées à l'intérieur de l'artwork afin de faciliter le recalage de l'échantillon de pixels lors de l'extraction.

Une opération de recherche des différences est alors réalisée sur la totalité de la partie distinctive en prenant le repère XY comme référentiel. La recherche des différences peut être effectuée pixel par pixel ou motif de pixels par motif de pixels, chaque motif de pixels pouvant comporter de deux à quelques pixels. A l'issue de chaque comparaison de pixels ou motif de pixels, une distance entre l'emplacement du pixel de la partie distinctive de référence et l'emplacement du pixel de la partie distinctive extraite est calculée. Le calcul des distances de tous les pixels ou motifs de pixels permet de déterminer un niveau de concordance entre la partie distinctive de référence et la partie distinctive extraite (étape 550 sur la figure 4).

Autrement dit, la recherche des différences peut reposer sur une estimation d'un score calculé pour chaque paire de pixels ou motifs de pixels, une paire de pixels ou de motifs de pixels étant constituée d'un pixel ou d'un motif de la partie distinctive extraite et d'un pixel ou motif de la partie distinctive de référence. Cette opération d'estimation du score peut être obtenue en calculant, en chaque point d'un repère orthonormé, la distance séparant le motif de la partie extraite et le motif de la partie de référence. Ainsi, dans le repère orthonormé XY, le score en un point x de l'axe X correspond à la distance suivant l'axe Y entre le motif de la partie extraite et le motif de la partie de référence. Cette distance peut être calculée en nombre de pixels. Les scores calculés en chaque point de l'axe X, pour une paire de pixels ou de motifs, sont cumulés pour constituer le score du pixel ou du motif de la partie extraite. Plus le score est petit, plus le pixel ou le motif de la partie distinctive extraite est proche du pixel ou du motif de la partie distinctive de référence. Ce score définit le niveau de concordance entre les deux parties distinctives.

Quel que soit son mode de réalisation, la comparaison entre les deux parties distinctives permet de déterminer si les différences entre les deux documents sont importantes ou non. Si le document sécurité a été falsifié ou est une contrefaçon, alors les différences seront importantes. Si le document sécurisé est l'original, alors les différences sont minimes. En effet, même si des différences peuvent exister puisque la partie distinctive extraite est issue d'une photographie ou d'un scan réalisé avec un appareil dont la définition n'est pas nécessairement excellente, les différences seront suffisamment légères pour déterminer qu'il s'agit de l'original.

Dans le mode de réalisation de la figure 4, l'opération 560 permet de comparer le niveau de concordance déterminé à l'étape 550 avec un niveau seuil. Le niveau de concordance seuil, c'est-à-dire considéré comme acceptable, peut être prédéfini en fonction de critères spécifiques au service de sécurité concerné. Il peut également être modulé en fonction de divers facteurs extérieurs comme, par exemple, des facteurs administratifs ou politiques. Le niveau de concordance déterminé est alors comparé au niveau de concordance seuil afin de déduire si le document sécurisé contrôlé est frauduleux ou non. Si le niveau de concordance déterminé est inférieur au niveau seuil, alors un message à l'attention du personnel de sécurité est affiché qui stipule que l'authentification est négative. Au contraire, si le niveau de concordance déterminé est supérieur ou égal au niveau seuil, alors le message à l'attention du personnel de sécurité stipule que l'authentification est positive.

L'homme du métier comprendra que ce procédé d'authentification a l'avantage de ne nécessiter l'ajout d'aucune donnée de personnalisation supplémentaire sur le document sécurisé. Seules des données initialement prévues sont sélectionnées pour permettre la mise en oeuvre du procédé d'authentification selon l'invention. Le document sécurisé ne subit aucune modification. Seuls des traitements de données sont ajouté en amont de la fabrication du document sécurisé et lors du contrôle dudit document.

Bien que décrit à travers un certain nombre d'exemples, variantes et modes de réalisation, le procédé d'authentification selon l'invention comprend divers variantes, modifications et perfectionnements qui apparaîtront de façon évidente à l'homme du métier, étant entendu que ces variantes, modifications et perfectionnements font partie de la portée de l'invention.

## Revendications

1. Procédé pour authentifier un document sécurisé (100) comportant des données imprimées par impression analogique ou numérique, ledit procédé comprenant les opérations suivantes :
- définition (300), parmi un ensemble de données graphiques et/ou alphanumériques du document sécurisé, d'au moins une zone de données distincte (200) incluant au moins un motif distinctif;
- pendant une opération de fabrication (400) du document sécurisé, mémorisation (410) de la zone de données distincte sur un dispositif de mémorisation de sorte à former une zone de données distincte de référence;
- au cours d'une opération de vérification (500) de l'authenticité du document sécurisé, extraction (530) de la zone de données distincte à partir d'une numérisation du document sécurisé; et
- comparaison (540) de la zone de données distincte extraite avec la zone de données distincte de référence pour déterminer un niveau de concordance entre lesdites zones de données distinctes et en déduire une authentification positive (570) ou négative (580).

2. Procédé selon la revendication 1, **caractérisé en ce que** l'opération de définition d'au moins une zone de données distincte comporte une sélection de lignes ou formes complexes prélevées dans un fichier d'impression et offrant des caractéristiques particulières.

3. Procédé selon la revendication 1, **caractérisé en ce que** l'opération de définition d'au moins une zone de données distincte comporte un traitement par séparation des couleurs et génération en demi-tons de ladite zone de données distincte.

4. Procédé selon l'une quelconque des revendications 1 à 3, **caractérisé en ce que** l'opération de fabrication (400) comporte une opération d'impression (420), sur un substrat, de l'ensemble des données graphiques et alphanumériques incluant la zone de données distincte de référence.

5. Procédé selon l'une quelconque des revendications 1 à 4, **caractérisé en ce que** l'opération de fabrication (400) comporte une opération de lamination (430) du substrat imprimé avec au moins une couche de matériau pour constituer le document sécurisé.

6. Procédé selon l'une quelconque des revendications 1 à 5, **caractérisé en ce que** l'impression est une impression offset.

7. Procédé selon l'une quelconque des revendications 1 à 6, **caractérisé en ce que** la mémorisation (410) de la zone de données distincte de référence est réalisée après l'impression de l'ensemble des données graphiques et alphanumériques et une première numérisation du document sécurisé.

8. Procédé selon la revendication 7, **caractérisé en ce que** l'opération de fabrication comporte une étape de calibration de la zone de données distincte de référence et de génération d'un fichier d'impression corrigé intégrant la zone de données distincte de référence et des bruits d'impression et/ou de lamination, un flux de matière et/ou des variations de couleurs résultants de l'impression analogique ou numérique.

9. Procédé selon l'une quelconque des revendications 1 à 6, **caractérisé en ce que** la mémorisation (410) de la zone de données distincte de référence est réalisée avant l'impression de l'ensemble des données graphiques et alphanumériques.

10. Procédé selon l'une quelconque des revendications 1 à 9, **caractérisé en ce que** la numérisation du document sécurisé (100) lors de l'opération de vérification (500) du document sécurisé consiste en un scan ou une photographie dudit document sécurisé.

11. Procédé selon l'une quelconque des revendications 1 à 10, **caractérisé en ce que** la zone de données distincte de référence est enregistrée dans une puce sécurisée.

12. Procédé selon l'une quelconque des revendications 1 à 10, **caractérisé en ce que** la zone de données distincte de référence est enregistrée dans un serveur distant.

13. Procédé selon l'une quelconque des revendications 1 à 12, **caractérisé en ce que** l'extraction (530) de la zone de données distincte pendant l'opération de vérification (500) du document sécurisé comporte une opération de prélèvement, sur ledit document numérisé, de la zone de données distincte correspondant à la zone de données distincte de référence.

14. Procédé selon la revendication 13, **caractérisé en ce que** l'opération de prélèvement comporte un traitement d'image assurant le calage de la zone de données distincte prélevée sur la zone de données distincte de référence.

15. Procédé selon la revendication 13 ou 14, **caractérisé en ce que** la zone de données distincte telle que numérisée est convertie dans un format pixels.

16. Procédé selon l'une quelconque des revendications 1 à 15, **caractérisé en ce que** l'opération de comparaison (540) de la zone de données distincte de référence avec la zone de données distincte extraite comporte une estimation d'un score basé sur une distance entre chaque point du motif de la zone de données distincte extraite et un point correspondant du motif de la zone de données distincte de référence.

17. Système d'authentification d'un document sécurisé comprenant au moins :
- un dispositif d'impression pour imprimer le dispositif sécurisé,
- un dispositif pour numériser le document sécurisé ; et
- un dispositif de traitement de données comportant un ensemble d'instructions qui amènent ledit dispositif à mettre en oeuvre le procédé d'authentification selon l'une quelconque des revendications 1 à 16.

18. Système d'authentification selon la revendication 17, **caractérisé en ce que** le dispositif pour numériser est un appareil photographique intégré à un smartphone.

19. Document sécurisé (100) comportant au moins une surface munie d'un ensemble de données graphiques et/ou alphanumériques imprimées par un procédé d'impression, **caractérisé en ce que** l'ensemble de données imprimées comporte une zone de données distincte (200) mémorisée et apte à être authentifiée par le procédé selon l'une quelconque des revendications 1 à 16.

20. Document sécurisé selon la revendication 19, **caractérisé en ce qu'**il comporte une puce sécurisée (130) dans laquelle la zone de données distincte de référence est mémorisée.
